# EUROPÄISCHE PATENTANMELDUNG

(11) **EP 1 099 933 A1**
(43) Veröffentlichungstag der Anmeldung: **16.05.2001**
(21) Anmeldenummer: 00250357.1
(22) Anmeldetag: 26.10.2000
(51) Int. Cl.: G01D 5/16, G01D 5/14

(54) **Magnetfeldsensor zur Ermittlung der position eines beweglichen Objektes**

(30) Priorität: 12.11.1999 DE 19956313
(71) Anmelder: AB REXROTH MECMAN, 125 81 Stockholm (SE)
(72) Erfinder: Disbo, Bo, 12741 Skärholmen (SE); Tomson, Tiit, 62352 Eskilstuna (SE)
(74) Vertreter: Maiwald, Walter, Dr. Dipl.-Chem.

(57) **Zusammenfassung**

Um einen Magnetfeldsensor zur Ermittlung der Position eines beweglichen Objektes, insbesondere zur Ermittlung der Position eines Kolbens innerhalb eines Fluidzylinders, vor einem magnetischen Streufeld zu schützen, wird vorgeschlagen, daß Abschirmmittel (12) zum Schutz der inneren elektronischen Meßmittel des Magnetfeldsensors (2) gegen das magnetische Streufeld (11)vorgesehen sind, wobei die Abschirmmittel (12) auf den Seiten des Sensorgehäuses positioniert sind, an denen das magnetische Streufeld (11) einwirkt.

## Beschreibung

Die Erfindung betrifft einen Magnetfeldsensor zur Ermittlung der Position eines beweglichen Objektes, insbesondere zur Ermittlung der Position eines Kolbens innerhalb eines Fluidzylinders, gemäß dem Oberbegriff des Anspruchs 1.

Der Kolben eines Fluidzylinders ist gewöhnlich mit einer Kolbenstange koaxial verbunden. Die Druckmittelbeaufschlagung des Fluidzylinders steht in einer funktionalen Abhängigkeit zur axialen Position der Kolbenstange. In vielen Einsatzfällen des Fluidzylinders ist es wichtig, die Position der Kolbenstange zu ermitteln. Aus diesem Grunde werden gewöhnlich Sensoren zur Detektion der Positionsparameter eingesetzt.

Ein Sensor zur Detektion der Position eines Kolbens innerhalb eines Fluidzylinders ist aus dem Produktkatalog "Know-how in Pneumatik" (Mannesmann Rexroth Pneumatik GmbH, 1993, Seite 3.005) bekannt. Der bekannte Sensor für einen sogenannten Shuttle-Cylinder besitzt ein Gehäuse aus Kunststoff. Das Gehäuse umgibt innere Meßmittel des Sensors. Die Meßmittel - z. B. eine elektrische Spulenanordnung - registrieren Änderungen des Magnetfeldes im Bereich des Sensors durch eine elektrische Induktion. Eine zentrale Datenverarbeitungseinheit nutzt diese Information über die wechselnden Stromparameter, um ein binäres Schaltsignal zu erzeugen. Zur elektrischen Anbindung der Meßmittel an die zentrale Datenverarbeitungsanlage ist das Ende eines Kabels mit dem Sensor verbunden. Das andere Ende des Kabels besitzt einen Stecker zur Ankopplung an die zentrale Datenverarbeitungseinheit.

Der Sensor ist auf die Außenoberfläche des Fluidzylinders montierbar. Hierfür sind Befestigungsmittel vorgesehen, um den Sensor ortsfest relativ zum Kolben innerhalb einer Längsnut am Fluidzylinder zu befestigen.

Der Kolben bewegt sich abgedichtet innerhalb des Fluidzylinders und wird durch Druckmittel - beispielsweise Druckluft - angetrieben. In den meisten Fällen ist der Fluidzylinder doppeltwirkend ausgebildet, d. h., daß die Druckluft auf beiden Seiten des Kolbens einwirken kann, um die Kolbenstange in beide Richtungen zur Aufbringung einer Kraft zu bewegen. Um die Position des Kolbens innerhalb des Fluidzylinders ermitteln zu können, ist der Kolben mit einem Permanentmagnet versehen. Wenn der Kolben sich relativ zum Zylindergehäuse bewegt, so ermittelt der Sensor den vorbeifahrenden Kolben durch die Wandung des Zylindergehäuses.

Bei bestimmten Einsatzfällen tritt das Problem auf, daß der Magnetfeldsensor neben dem Magnetfeld des Permanentmagneten am Kolben auch andere systemfremde Magnetfelder erkennen kann. Diese anderen Magnetfelder können durch störende Strahlungsquellen in der Nähe des Magnetsensors emittiert werden. Ein weiteres Problem kann ein starkes Magnetfeld darstellen, das durch einen bewegten Permanentmagneten oder einer stromdurchflossenen elektrischen Spule in den Nähe des Sensors besteht. Diese wechselnden Streufelder können ungültige Stromsignale in den Magnetfeldsensor induzieren, so daß der Sensor falsche Schaltsignale erzeugt.

Es ist daher die Aufgabe der vorliegenden Erfindung, einen Magnetfeldsensor der vorstehend beschriebenen Art dahingehend weiterzuverbessern, daß korrekte Sensorsignale auch in einer Umgebung von störenden elektromagnetischen oder magnetischen Feldern sichergestellt sind.

Die Aufgabe wird ausgehend von einem Magnetfeldsensor gemäß dem Oberbegriff des Anspruchs 1 in Verbindung mit dessen kennzeichnenden Merkmalen gelöst.

Die Erfindung schließt die technische Lehre ein, daß Abschirmmittel zum Schutz der inneren elektronischen Meßmittel des Magnetfeldsensors vorgesehen sind, die diesen gegen ein störendes elektromagnetisches oder magnetisches Streufeld schützen, das von einer Strahlungsquelle in der Nähe des Magnetfeldsensors emittiert wird. Hierbei sind die Abschirmmittel an jenen Seiten des Gehäuses des Magnetfeldsensors positioniert, an denen das magnetische Streufeld auf die Meßmittel einwirkt. Insbesondere können die Abschirmmittel zu allen Seiten des Magnetfeldsensors positioniert sein.

In einer bevorzugten Ausführungsform der Erfindung sind die Abschirmmittel aus einem U-förmigen Metallblech hergestellt. Die Abschirmmittel können aus einem ferromagnetischen Material bestehen. Es ist möglich, hierfür Stahl oder ein anderes geeignetes Metall zu benutzen.

Besonders vorteilhaft ist es, wenn die Abschirmmittel direkt in das nichtmetallische Gehäuse des Magnetfeldsensors integriert sind. Alternativ dazu ist es möglich, die Abschirmmittel beabstandet zum nichtmetallischen Gehäuse des Magnetfeldsensors anzuordnen. Vorzugsweise sind die Abschirmmittel jedoch auf der Außenoberfläche des Gehäuses befestigt.

Weitere die Erfindung verbessernde Maßnahmen sind in den Unteransprüchen angegeben bzw. werden nachstehend gemeinsam mit der Beschreibung eines bevorzugten Ausführungsbeispiels der Erfindung anhand der Figuren näher dargestellt. Es zeigt:
- Fig. 1: eine schematische Seitenansicht eines Fluidzylinders mit einem auf dessen Außenoberfläche montierten Magnetfeldsensor und
- Fig. 2: eine schematische Frontansicht des Fluidzylinders gemäß Figur 1.

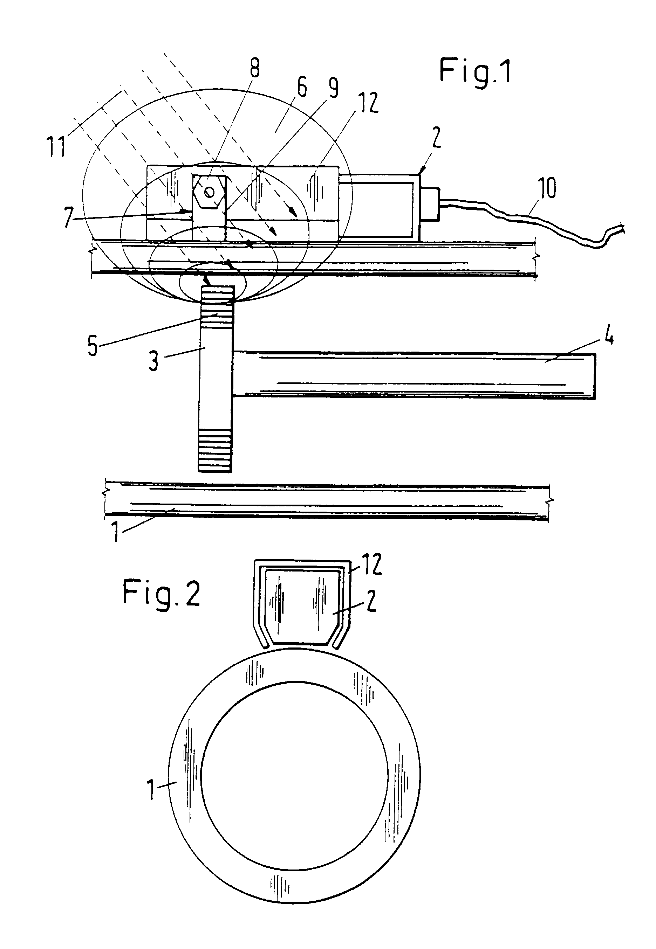

Nach Figur 1 ist ein Fluidzylinder 1 mit einem Magnetfeldsensor 2 ausgestattet. Der Fluidzylinder 1 besitzt einen Kolben 3, an dem eine Kolbenstange 4 koaxial befestigt ist. Der Kolben 3 ist mit einem Permanentmagneten 5 versehen. Das Magnetfeld 6 des Permanentmagneten 5 wirkt mit dem Sensor 2 zur Erkennung der Position des Kolbens 3 durch die Wandung des Fluidzylinders 1 zusammen. Der Magnetfeldsensor 2 erkennt die Position des Kolbens 3, wenn der Kolben 3 den Magnetfeldsensor 2 passiert.

Der Magnetfeldsensor 2 umfaßt einen Befestigungsabschnitt 7 zur Befestigung auf einer Außenoberfläche des Fluidzylinders 1. Um den Sensor 2 auf dem Fluidzylinder 1 zu montieren, dient eine Schraube 8 und ein Klip 9. Der Klip 9 wirkt mit einer hier nicht dargestellten Längsnut am Fluidzylinder 1 zusammen, so daß eine Klemmbefestigung hergestellt ist. Ein Kabel 10 ist an einem Ende des Magnetfeldsensors 2 befestigt und bildet eine Kabelverbindung mit einer hier nicht gezeigten zentralen Datenverarbeitungseinheit, die die Sensordaten eines oder mehrerer Sensoren sammelt und verarbeitet.

Der Magnetfeldsensor 2 ist von einem störenden magnetischen Streufeld 11 beeinflußt. Das Streufeld 11 wird von einer naheliegenden Quelle - beispielsweise ein Roboter in der Nähe des Fluidzylinders 1 - emittiert. Um die inneren elektronischen Meßmittel des Magnetfeldsensors 2 gegen dieses Streufeld 11 zu schützen, ist der Magnetfeldsensor 2 mit Abschirmmitteln 12 ausgestattet.

Die Abschirmmittel 12 sind an drei Seiten des Gehäuses des Magnetfeldsensors 2 angeordnet, um einen sicheren Schutz gegen das Streufeld 11 zu schaffen. Die Abschirmmittel 12 bestehen aus Stahl und sind aus einem U-förmigen Blech - wie aus Figur 2 hervorgeht - hergestellt. Das Profil des Bleches ist an die Gestalt des Gehäuses des Magnetfeldsensors 2 angepaßt. Beide Enden des U-förmigen Bleches sind abgekantet, um die Abschirmmittel 12 am Sensorgehäuse durch eine Klipverbindung zu befestigen.

Die Erfindung ist nicht beschränkt auf das vorstehend beschriebene bevorzugte Ausführungsbeispiel. Vielmehr sind auch Abwandlungen denkbar, die auch bei einer grundsätzlich anders gearteten Ausführungsform von der Erfindung Gebrauch machen.

### Bezugszeichenliste

- **1**: Fluidzylinder
- **2**: Magnetfeldsensor
- **3**: Kolben
- **4**: Kolbenstange
- **5**: Permanentmagnet
- **6**: Magnetfeld
- **7**: Befestigungsabschnitt
- **8**: Schraube
- **9**: Klip
- **10**: Kabel
- **11**: magnetisches Streufeld
- **12**: Abschirmmittel

## Patentansprüche

1. Magnetfeldsensor zur Ermittlung der Position eines beweglichen Objektes, insbesondere zur Ermittlung der Position eines Kolbens innerhalb eines Fluidzylinders, umfassend:
ein Sensorgehäuse aus im wesentlichen nichtmetallischem Material, um innenliegende elektronische Meßmittel zu umgeben,
ein Kabel oder eine Buchse, der/die auf dem Sensorgehäuse zur Herstellung einer elektrischen Verbindung zwischen den Meßmitteln und einer zentralen Datenverarbeitungseinheit am Sensorgehäuse vorgesehen ist,
Montagemittel zur Befestigung des Sensorgehäuses ortsfest relativ zum beweglichen Objekt,
dadurch gekennzeichnet,
daß Abschirmmittel (12) zum Schutz der inneren elektronischen Meßmittel gegen ein störendes magnetisches Streufeld (11) vorgesehen sind, das von einer Strahlungsquelle in der Nähe des Magnetfeldsensors emittiert wird, wobei die Abschirmmittel (12) an jenen Seiten des Sensorgehäuses vorgesehen sind, an denen das magnetische Streufeld (11) einwirkt.

2. Magnetfeldsensor nach Anspruch 1,
dadurch gekennzeichnet,
daß die Abschirmmittel (12) zumindest teilweise das Sensorgehäuse umgeben.

3. Magnetfeldsensor nach Anspruch 1,
dadurch gekennzeichnet,
daß die Abschirmmittel (12) aus einem U-förmigen Metallblech hergestellt sind.

4. Magnetfeldsensor nach einem der vorstehenden Ansprüche,
dadurch gekennzeichnet,
daß die Abschirmmittel (12) aus einem ferromagnetischen Material bestehen.

5. Magnetfeldsensor nach einem der vorstehenden Ansprüche,
dadurch gekennzeichnet,
daß die Abschirmmittel (12) aus Stahl bestehen.

6. Magnetfeldsensor nach einem der vorstehenden Ansprüche,
dadurch gekennzeichnet,
daß die Abschirmmittel (12) im nichtmetallischen Sensorgehäuse integriert untergebracht sind.

7. Magnetfeldsensor nach einem der vorstehenden Ansprüche,
dadurch gekennzeichnet,
daß die Abschirmmittel (12) in einem geringen Abstand zum nichtmetallischen Sensorgehäuse angeordnet sind.

8. Magnetfeldsensor nach einem der vorstehenden Ansprüche,
dadurch gekennzeichnet,
daß die Abschirmmittel (12) auf der Außenoberfläche des Sensorgehäuses befestigt sind.

9. Magnetfeldsensor nach einem der vorstehenden Ansprüche
dadurch gekennzeichnet,
daß das am Sensorgehäuse befestigte Kabel (10) als flexible Leitung ausgebildet ist, um die innenliegenden Meßmittel (12) mit einer zentralen Datenverarbeitungseinheit zu verbinden.
